# EUROPEAN PATENT SPECIFICATION

(11) **EP 2 626 193 B1**
(45) Date of publication and mention of the grant of the patent: **22.03.2017**
(21) Application number: 12196137.9
(22) Date of filing: 07.12.2012
(51) Int. Cl.: B29C 70/08, B29C 70/52, B29L 31/10, B29K 105/04, B29C 44/32

(54) **Method for producing fibre reinforced structural elements having insulating capabilities**
Verfahren zur Herstellung von faserverstärkten Strukturelementen mit verbesserten Isolationskapazitäten
Procédé de production d'éléments structuraux renforcés par des fibres présentant de meilleures capacités d'isolation

(30) Priority: 07.12.2011 EP 11192443
(43) Date of publication of application: 14.08.2013
(73) Proprietor: FIBERLINE A/S, 5500 Middelfart (DK)
(72) Inventor: Thorning, Peter, 6600 Kolding (DK)
(74) Representative: Budde Schou A/S

(56) References cited:
- EP-A2- 0 158 118
- WO-A1-2007/009214
- CA-A1- 2 447 745
- GB-A- 1 052 431
- US-A- 5 876 641
- US-A1- 2011 052 904

## Description

The present invention relates generally to an apparatus and a method for producing fibre reinforced structural elements having excellent strength and load bearing capabilities, low weight as well as superior insulating properties. The present invention also relates to the provision of insulated fibre reinforced structural elements for use as e.g. window frames and load bearing beams. Yet further, the present invention relates to a building structure.

The use of fibre reinforced structural elements has increased rapidly within the last decades. Within the building industry, fibre reinforced structural elements have gained success as load bearing elements due to their low weight as compared to their load bearing capabilities. Further advantages include a high resistance to corrosion and excellent electrical insulating properties. The production of fibre reinforced structural elements using the pultrusion technique is, as such, generally known. Pultrusion is understood to be the technology in which structural profiles with identical cross section configuration are produced by impregnating a continuous bundle or web of reinforcing fibres, typically glass fibres, in a bath of curable matrix material, i.e. polymeric impregnation material, and, subsequently pulling the impregnated fibres through a die for achieving a specific cross section configuration of the end product. One example of a pultruded building element in the form of a window element is disclosed in US2008/0313963 assigned to the company Fiberline A/S. The above document in particular discloses a weather resistant building element.

However, a drawback of the above mentioned fibre reinforced structural elements is the fact that both the cured polymeric impregnation material as well as the reinforcing fibres have a relatively high thermal conductivity. When such fibre reinforced structural elements are used in a building structure subjected to a temperature difference, as e.g. a window frame or as a beam between a cold area, e.g. outdoor area or cold storage room or the like, and a warm area, e.g. a heated indoor area, the pultruded element may constitute a thermal bridge between the cold area and the warm area. A thermal bridge occurs when a supporting beam or frame between a cold area and a warm area conducts a significant amount of heat away from the warm area when comparing to properly insulated areas of the building structure. As an example, a frame of an insulated dual or triple pane window made entirely of pultruded reinforced fibre composite material will have a thermal conductivity being about five times higher than the conductivity between the window panes. Thus, the excellent thermal properties of the insulated window are compromised by using less than optimally insulated frames. Similarly, the insulated area between an inner wall and an outer wall may be compromised by using a support beam of a thermally conductive material. However, typical insulating materials such as foams have very low load bearing capabilities. There is thus a need for methods and systems for manufacturing beams and frames with both high load bearing capabilities and high insulation properties.

US2007/0013096 discloses a composite article having an outer skin layer and an inner foam layer. The above document further describes a method for continuously forming the composite article. The method includes a first stage in which the skin layer is impregnated, a second stage in which the foam layer is applied and a third stage comprising the curing of the foam and skin.

US 2011/0052904 A1 does describe a pultrusion article and a manufacturing method for manufacturing the same, in which the article comprise a shell and a core. The shell is solid whereas the core is foamed. Thermoset resin is delivered via the delivery chambers which form part of a mandrel which in turn is located between the fibres at the periphery of the die chamber. The thermoset resin forms a foam core and the pressure generated from the foaming agent causes the foamed material to flow towards the periphery of the die chamber and form a solid skin about the fibres.

Further prior art includes US4994309 disclosing an insulation spacer located between two glazing sheets, EP1637685 disclosing a composite window frame assembly, US5996297 disclosing an insulated connector for connecting two structural layers together, WO2009/005515 disclosing an insulated panel having a rigid foam core, US4121008 disclosing a sandwich construction including an inner stress carrying foam layer, US3246058 disclosing a method of producing reinforced laminate foamed structures, US5344685 disclosing a foam core of random structure, US4469733 disclosing a foam sandwich construction having load bearing foam core, US2006/0150577 disclosing a spacer assembly between two glass sheets having a long diffusion path, US5890289 disclosing a method of making a hollow insulated spacer, US6192651 disclosing a foam filled muntin bar, and US2004/0079047 disclosing a spacer having a lengthened thermal path.

Yet further related prior art includes: FR2861764A1, EP1524380A1, WO05033459A2, JP2005105731A2, JP2005076302A2, DE10316153A1, JP2004232317A2, EP1431471A2, WO04001154A1, CA2415171AA, WO03038365A1, GB2378972A and GB2375553A. All of the above US documents are hereby incorporated by reference.

However, it has been noted that fibre reinforced elements or profiles comprising an embedded insulation layer and a fibre reinforced layer have the disadvantage that the structural load bearing properties of the insulation layer is significantly lower than the structural load bearing capabilities of the fibre reinforced layer. It is therefore an object of the present invention to provide techniques for the dimensioning and the production of pultruded fibre reinforced elements having embedded volumes of insulating material such that both the load bearing capabilities as well as the insulation properties are optimized while keeping the weight and volume of the pultruded fibre reinforced elements as low/small as possible.

It has been further noted that the transition between the fibre reinforced layer and the insulation layer constitutes a structurally weak area which may easily delaminate when subjected to external forces. It is therefore a further object of the present invention to provide techniques for producing a pultruded fibre reinforced element or profile with a stronger bonding between the fibre reinforced layer and the insulation layer.

It is a feature of the present invention to provide a novel technique of manufacturing a multilayer fibre reinforced structure including insulating materials, which optionally may comprise polyester based insulating foams or similar components, for use in e.g. glazed window frames and thereby providing 1) a high degree of integration between the reinforcing fibres and the insulating material and at the same time 2) distributing the insulation material and reinforcing fibres within the structural element such that an advantageous stress distribution is achieved within the fibre reinforced structure.

It is an advantage of the present invention that the novel technique according to the present invention provides a light weight fibre reinforce structural element with improved transmission of force and impact to and from the fibre reinforced structure thereby allowing a reduction of the size of the fibre reinforce structural element, i.e. providing a reduction of the weight of the fibre reinforce structural element or in the alternative a reduction of the materials used for the fibre reinforce structural element.

The above object, the above features and the above advantage together with numerous other objects, advantages and features which will be evident from the below detailed description of the present invention are according to a first aspect of the present invention obtained by a method of producing a fibre reinforced profile by using a pultrusion plant, said method comprising the steps of:
i) introducing a reinforcing web structure and liquid matrix materials into said pultrusion plant, said reinforcing structure comprising a first layer of reinforcing fibres and a second layer of reinforcing fibres, said first layer of reinforcing fibres and said second layer of reinforcing fibres being arranged opposite each other and defining an enclosed space between themselves within said pultrusion plant,
ii) impregnating said first layer of reinforcing fibres by introducing a first amount of a first liquid matrix material into said pultrusion plant, impregnating said second layer of reinforcing fibres by introducing a second amount of a second liquid matrix material into said pultrusion plant, introducing a third amount of a third liquid matrix material into said pultrusion plant and expanding said third amount of said liquid matrix material within said enclosed space between said first layer of reinforcing fibres and said second layer of reinforcing fibres, said first, second and third liquid matrix materials being compatible and of identical composition, and
iii) curing said first amount of said first liquid matrix material in a substantially non-expanded state within said first layer of reinforcing fibres, curing said second amount of said second liquid matrix material in a substantially non-expanded state within said second layer of reinforcing fibres, and curing said third amount of said third liquid matrix material in an expanded state within said enclosed space between said first layer and said second layer of reinforcing fibres.

The fibre reinforced profile may be a window frame, a beam or a plate to be used in a building structure or the like. The reinforcing structure comprises the first layer and the second layer, which layers are typically provided by separate rolls and introduced into the pultrusion assembly juxtaposing each other and defining a spacing in-between them. The layers of reinforcing fibres may be provided in the form of a web or in the form of fibre bundles. When inside the pultrusion assembly, an enclosed space is defined as the space between the first and second layers and the side walls of the pultrusion assembly. The first and second layers will typically be in close contact with an upper and lower wall of the pultrusion assembly.

The first, second and third liquid matrix materials are typically stored in a common storage tank. Alternatively, they may constitute e.g. two component epoxy materials which are to be mixed only shortly before being applied to the reinforcing web material. The first, second and third liquid matrix materials are compatible and of identical composition meaning that all of the liquid matrix materials in principle are expandable. In the present context, the first liquid matrix material is defined as the portion of the liquid matrix material which enters and remains inside the first layer, the second liquid matrix material is defined as the portion of the liquid matrix material which enters and remains inside the second layer and the third liquid matrix material is defined as the portion of the liquid matrix material which enters and remains inside the enclosed space, although all liquid matrix material may originate from the same storage container and/or the same impregnation nozzle. The third liquid matrix material is expanded, typically by foaming or similar bubble formation, inside the enclosed space by applying heat from the outside. Since the enclosed space is empty, the foaming is not spatially hindered until reaching the reinforcing structure of the side walls of the pultrusion assembly and thus a multicell foam will generate, fill the entire enclosed space and apply a pressure onto the first and second layers. The first and second matrix materials will not expand or only expand very slightly and will thus generate a relatively compact structure together with the reinforcing fibres.

The applicant has surprisingly found out that the first and second matrix although in principle expandable, will not expand inside the reinforcing structure since the reinforcing fibres will prevent any significant foaming inside the layers and a compact structure will result. Thus, the first, second and third matrix materials may be of identical composition. This has the advantage that curing bonds will form between the first, second and third matrix materials. In other words, the expanded third matrix material will form an integral structure with the substantially non-expanded first and second matrix materials. Further, near the transition between the reinforcing structure and the enclosed space, a gradually increasing foam structure will build. Since the foam thus gradually transforms into a compact structure, a much stronger connection between the layers is achieved compared to using a different matrix material for the compact reinforcing structure and for the foam inside the enclosed space. Thus, in the transition between the reinforcing structure and the enclosed space, there will exist a small amount of foam, however, the outwardly oriented surfaces of the first and second layers will be flat and substantially free from any foam. The reinforcing structure will be substantially free from voids in the form of foam bubbles and will have a structural load bearing capability exceeding that of a structure made using a third matrix material different from the first and second matrix material. The curing of the first, second and third matrix material is performed by further heating of the reinforced structure to achieve a solidification of the first, second and third matrix materials.

According to a further embodiment of the method according to the first aspect, said method further comprising the initial step of applying said first, second and third liquid matrix materials between said first layer of reinforcing fibres and said second layer of reinforcing fibres. The most convenient method of applying the first, second and third matrix materials is to apply them onto the first layer of the reinforcing structure prior to entering the pultrusion assembly by using a common nozzle. The matrix materials, being of identical composition, will not be separated until entry into the pultrusion assembly in which the first and second matrix materials will be pressed into the reinforcing structure thereby impregnating it, and the third matrix material will remain in the enclosed space and expand upon being heated inside the pultrusion assembly.

According to a further embodiment of the method according to the first aspect, the expansion of said third amount of said liquid matrix material is causing said first amount of said liquid matrix material to propagate into said first layer of reinforcing fibres so as to impregnate said first layer and said second amount of said liquid matrix material to propagate into said second layer of reinforcing fibres so as to impregnate said second layer. Further, by choosing an appropriate amount of matrix material and heating within the pultrusion assembly, the expansion of the third matrix material will initiate prior to curing, or at least substantial curing, of the second and first matrix materials. In particular, the first and second matrix materials may initially start to expand together with the third matrix material until the complete enclosed space is filled, whereafter the pressure generated by the expansion will force the first and second at least partially expanded matrix materials into the reinforcing structure. When the partially expanded first and second matrix materials enter the reinforcing structure, the expansion will reverse due to the presence of the reinforcing fibres and a compact structure will be achieved.

According to a preferred embodiment of the method according to the first aspect, said method further comprising the step of introducing a mandrel partially between said first layer and said second layer of reinforcing fibres and adjacent said enclosed space. According to a further embodiment of the present invention, the mandrel is used for securing that the enclosed space is established between the first and second layer. In the present embodiment the first, second and third matrix materials are applied via nozzles located inside the pultrusion assembly, i.e. in the top wall, bottom wall and/or side wall. In this way, a high pressure may be applied to the matrix materials in order to ensure a proper impregnation of the first and second matrix into the reinforcing structure.

According to a further embodiment of the method according to the first aspect, said first, second and third amount of liquid matrix material is introduced into said first layer of reinforcing fibres and/or said second layer of reinforcing fibres in a direction towards said mandrel, said third amount of liquid matrix material entering said enclosed space via said first layer of reinforcing fibres and/or said second layer of reinforcing fibres. According to a further embodiment of the present invention, the third matrix material is introduced via the first layer of reinforcing fibres and/or the second layer of reinforcing fibres by providing nozzles at the top and bottom walls of the pultrusion assembly and directed toward the mandrel such that all matrix material is injected into either the first or the second layer. In this way, a proper impregnation of the reinforcing structure is achieved. The third matrix material will enter into the enclosed space as excess resin from the reinforcing structure. When applying heat, the third matrix material will expand.

According to a further embodiment of the method according to the first aspect, a foaming promoting agent is selectively introduced into said third liquid matrix material via said mandrel. To ensure proper foaming, a foam promoting agent may be used. Alternatively, the foam promoting agent may be necessary for achieving any substantial foaming and thus local foaming may be achieved by injecting the foam promoting agent selectively during pultrusion. Further, the degree of foaming may be regulated by using the foam promoting agent.

According to a further embodiment of the method according to the first aspect, said third liquid matrix material includes a foaming promoting agent. Alternatively, the third matrix material may be injected separately and already includes a foam promoting agent.

According to a further embodiment of the method according to the first aspect, said reinforcing structure comprises a foaming promoting agent located on inwardly oriented surfaces of said first layer of reinforcing fibres and said second layer of reinforcing fibres. Yet alternatively, the foam promoting agent is printed on the inward surface of the first and second layers. In this way, only the third matrix material will be affected by the foam promoting agent. The present embodiment has the additional advantage of not requiring any modification of the pultrusion assembly for introducing the foaming promoting agent.

According to a further embodiment of the method according to the first aspect, said foaming promoting agent is water. One suitable foaming promoting agent constitutes water. Water will turn into water vapour at 100°C. Thus, upon heating the reinforcing structure, the liquid water distributed within the third matrix material will vaporize and generate small bubbles causing the third matrix material to expand. Upon cooling, the small bubbles will remain and make up the foam. The vapour temperature of water is below the typical curing temperature of the third matrix material.

According to a further embodiment of the method according to the first aspect, the curing and/or foaming is initiated by heat or microwaves. The expansion of the third matrix material by foaming may in some embodiments be inherent of the material used, however, it is preferable that the foaming is initiated by heat or alternatively microwaves in order to achieve a controlled foaming.

According to a further embodiment of the method according to the first aspect, said first, second and third liquid matrix material is based on polyurethane (PUR), polyisocyanurat (PIR) or epoxy. The applicant has found out that the above mentioned material is suitable for generating a foam and for forming a compact structure

According to a further embodiment of the method according to the first aspect, said reinforcing fibres are based on glass fibres, aramid fibres, natural fibres or thermoplastic fibres. The applicant has found out that the above mentioned reinforcing fibres are preferable for preventing foaming.

According to a further embodiment of the method according to the first aspect, said curing is occurring in a continuous sequence of steps. The curing of the first, second and third matrix material is preferably occurring simultaneously in order to achieve a good bonding structure between the reinforcing structure and the foam.

According to a further embodiment of the method according to the first aspect, said impregnating, expanding and curing are occurring in a continuous sequence of steps. Thus, the impregnation, i.e. injection of matrix material into the reinforcing structure, the foaming and the solidification of the matrix material may be occurring, in a cross sectional cut out of the structure, simultaneously, in order to achieve a profile without any undesired internal stress built in the reinforced profile. It is a further advantage of the present invention that the novel technique of providing fibre reinforced elements may be carried out continuously in a single apparatus without requiring any intermittent process steps.

According to a further embodiment of the method according to the first aspect, during said curing, the solidification of said first liquid matrix material at the outwardly facing surface of said first layer and the solidification of said second liquid matrix material at the outwardly facing surface of said second layer are effected before the solidification of said third matrix material. In this way, it is ensured that a foam initiated and outwardly directed pressure exists during curing of the outer regions of the profile and thus any voids in the load bearing fibre reinforced parts of the structure will be prevented.

The above object, the above features and the above advantage together with numerous other objects, advantages and features which will be evident from the below detailed description of the present invention, are according to a second aspect of the present invention obtained by a pultrusion assembly for producing a fibre reinforced profile, said plant being capable of receiving a reinforcing structure, said reinforcing structure comprising a first layer of reinforcing fibres and a second layer of reinforcing fibres, said first layer of reinforcing fibres and said second layer of reinforcing fibres being arranged opposite each other and defining an enclosed space between themselves when introduced into said pultrusion assembly, said pultrusion assembly being adapted for receiving a first amount of a first liquid matrix material and impregnating said first layer of reinforcing fibres by said first amount of said first liquid matrix material, receiving a second amount of a second liquid matrix material and impregnating said second layer of reinforcing fibres by said second amount of said second liquid matrix material, receiving a third amount of a third liquid matrix material and expanding said third amount of said third liquid matrix material within said enclosed space between said first layer of reinforcing fibres and said second layer of reinforcing fibres, said first, second and third liquid matrix materials being compatible and of identical composition, and, curing said first amount of said liquid matrix material in a substantially non-expanded state within said first layer of reinforcing fibres, curing said second amount of said liquid matrix material in a substantially non-expanded state within said second layer of reinforcing fibres, and curing said third amount of said liquid matrix material in an expanded state within said enclosed space between said first layer and said second layer of reinforcing fibres.

The above assembly according to the second aspect is preferably used to carry out the method according to the first aspect.

The above object, the above features and the above advantage together with numerous other objects, advantages and features which will be evident from the below detailed description of the present invention, are according to a third aspect of the present invention obtained by a fibre reinforced profile comprising a first layer comprising a first reinforcing fibre web impregnated by a first solidified matrix material being in a substantially non-expanded state, a second layer comprising a second reinforcing fibre web impregnated by a second solidified matrix material being in a substantially non-expanded state and a third layer comprising a third solidified matrix material being in an expanded state and enclosed between said first layer and said second layer, said first, second and third solidified matrix material being compatible and of identical composition, said solidified third matrix material of said third layer being bonded together with said first solidified matrix material of said first layer and/or said second solidified matrix material of said second layer in an integral structure solely through cured bonding agents cured in a single curing process and initially introduced into said first, second and/or third layer in an uncured state.

The above fibre reinforced profile according to the third aspect is preferably manufactured using the assembly according to the second and the method according to the first aspect. The matrix material is preferably provided in liquid form. The cured bonding agents which are part of the cured matrix material will at the transition between the first, second and third layer exhibit a gradual transition between non-expanded state and fully expanded state.

According to a further embodiment of the profile according to the third aspect, the thickness of said third layer is at least ten times larger than the thickness of said first layer and/or of said second layer of fibre reinforced composite material. In order to achieve high insulation properties of the profile, the thickness of the third expanded layer, i.e. foam layer, will be significantly larger than the thickness of the fibre reinforced composite material constituting the second and third layers. It is to be understood that the content of reinforcing fibres to some extent depends on the coefficient of thermal expansion of the solidified or hardened resin as a resin having a coefficient of thermal expansion highly different from the coefficient of thermal expansion of the plate material, e.g. glass, may necessitate the use of a higher content of reinforcing fibres.

According to a further embodiment of the profile according to the third aspect, said third solidified matrix material is a solid foam. Preferably, a foam is used due to the high thermal insulation properties.

According to a further embodiment of the profile according to the third aspect, the outwardly facing surfaces of said first layer and second layer are substantially flat and non-foamed. Voids, such as foam or bubble formation, should be avoided inside and on the surface of the first and second fibre reinforced layers.

According to a further embodiment of the profile according to the third aspect, said first solidified matrix material at the inwardly facing surface of said first layer and said second solidified matrix material at the inwardly facing surface of said second layer exhibit at least some foam formation. Since the transition between the substantially non-foamed first and second layers and the foamed third layer should be smooth, some foaming may be allowed within the first and second layers at the inwardly oriented surfaces of the first layer and second layer, respectively.

In the present context, the technique defined as pultrusion is to be considered comprising any technique resembling the technique conventionally known as pultrusion involving the pulling of reinforcing fibres or layers through an extrusion die and involving the utilisation of thermosetting resins and further equivalent techniques such as co-extrusion / pultrusion, extrusion of fibre reinforced thermoplastics materials or a technique known as pulforming, in which a pre-cast or pre-extruded polymer body is formed into a specific shape by pulling the pre-cast or pre-extruded element or body. Consequently, it is to be understood that any technique covered by the above terms or equivalent techniques comprising continuous, semi-continuous or intermittent production of elements, such as the plate elements according to the present invention, are to be construed equivalences to the pultrusion technique described in the present specification.

### BRIEF DESCRIPTION OF THE DRAWINGS

Fig. 1A is a perspective view of a pultrusion assembly using a solid insulation material inserted between two impregnated fibre bumdles.
Fig. 1B is a perspective view of a pultrusion assembly using a liquid matrix material applied in between two fibre bundles.
Fig. 1C is a perspective view of a pultrusion assembly in which liquid matrix material is introduced through the bundles of reinforcing fibres.
Fig. 2A is a cut out view of the pultrusion assembly as shown in Fig 1A.
Fig. 2B is a cut out view of the pultrusion assembly as shown in Fig 1B.
Fig. 2C is a cut out view of the pultrusion assembly as shown in Fig 1C.
Fig. 2D is a cut out view of the pultrusion assembly using a hollow mandrel for introducing matrix material.
Fig. 2E is a cut out view of the pultrusion assembly using a hollow mandrel for introducing foam promoting agent.
Fig. 3A is a perspective view of a pultrusion assembly including fibre bundles having local integrated foam promoting agents.
Fig. 3B is a perspective view of a pultrusion assembly including mandrels and a non linear shaped outlet for producing non-uniform profiles.
Fig. 4A-F is a series showing fibre reinforced structural elements having increased insulation properties together with corresponding plots showing heat transfer coefficients and load bearing capabilities along a transversal direction.

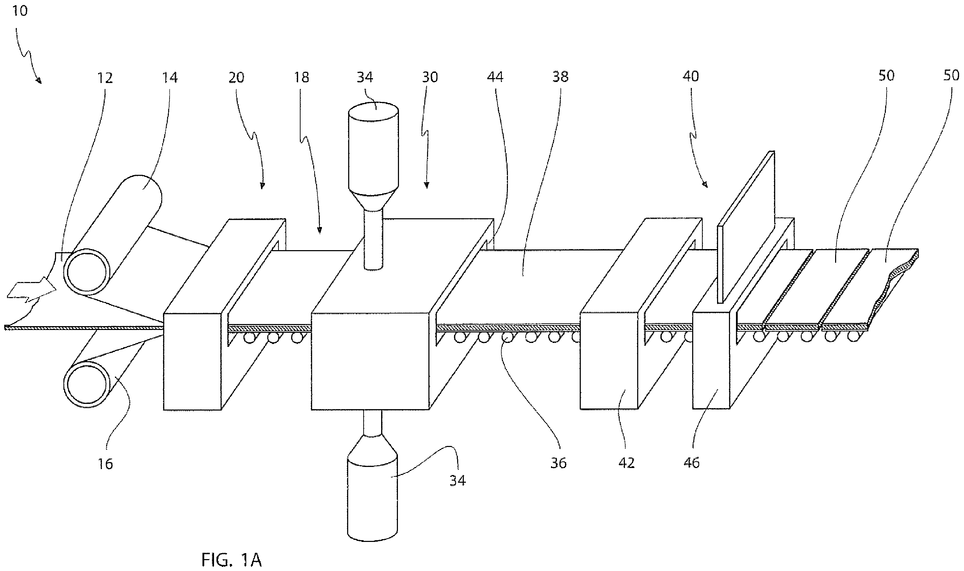

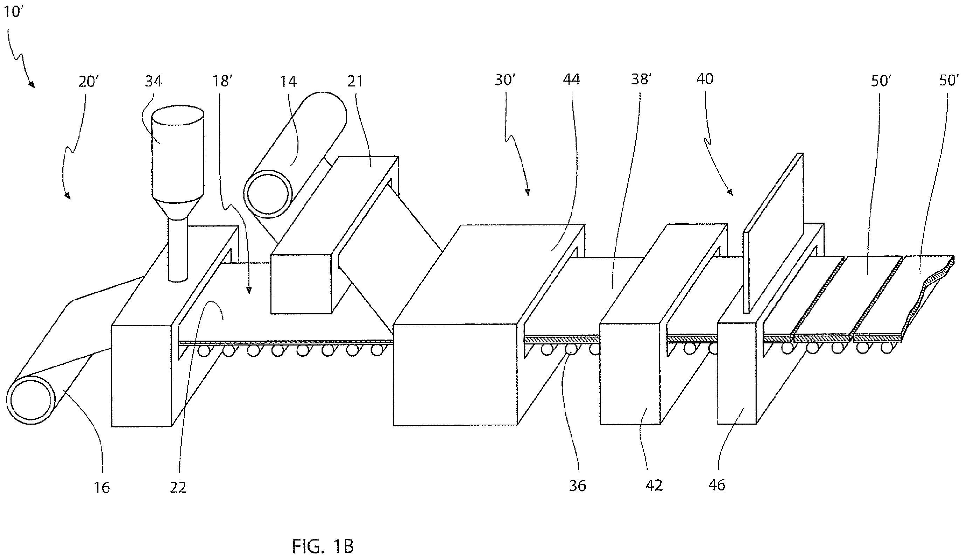

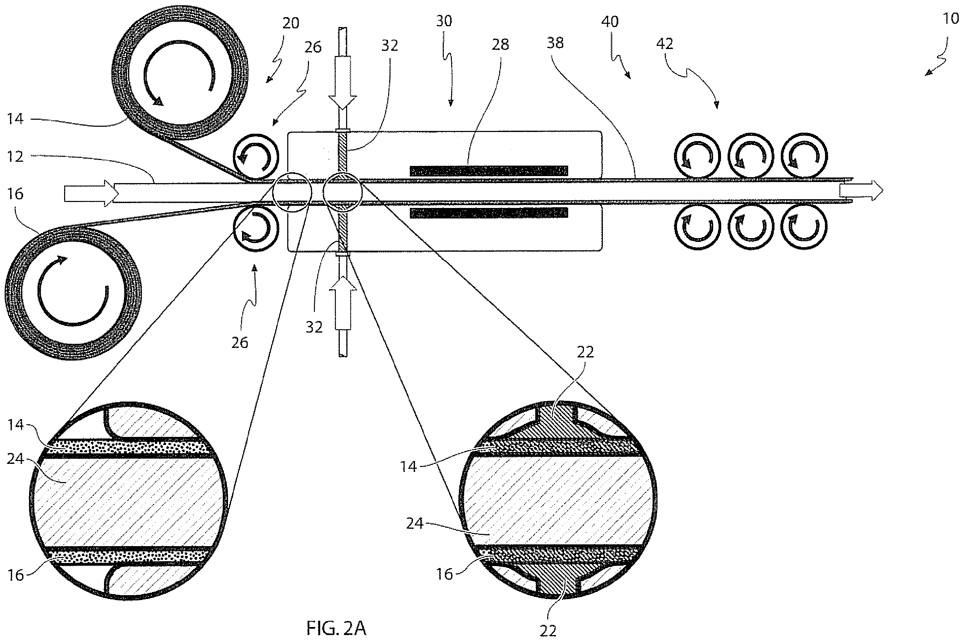

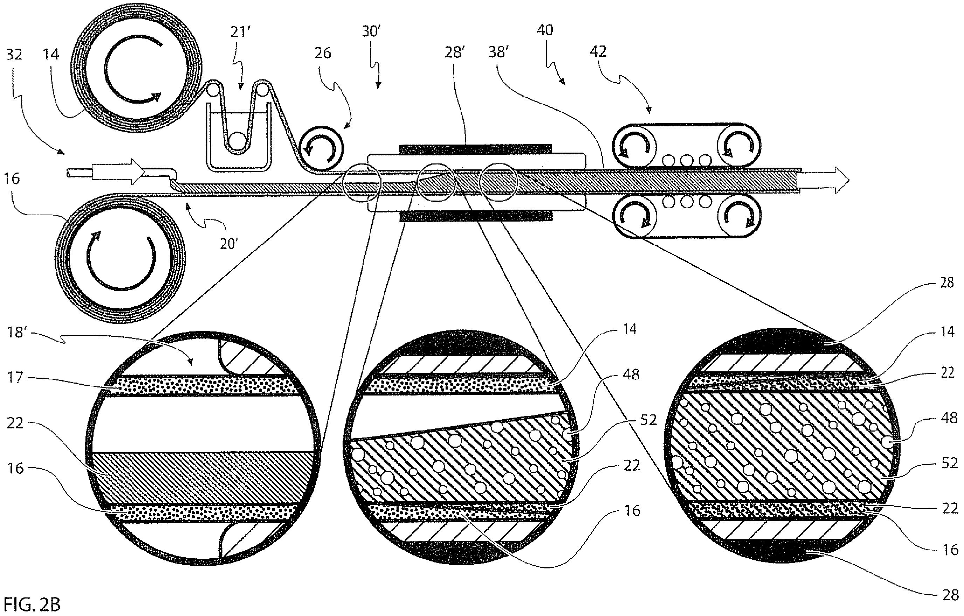

Figures 1A, 1B, 2A, 2B and the related description below constitutes examples which are useful for understanding the invention.

### DETAILED DESCRIPTION OF THE DRAWINGS

Fig. 1A is a partly sectional, perspective and schematic view of a first embodiment of a pultrusion apparatus, designated the reference numeral 10 in its entirety, in which a fibre reinforced, resin hardened structural element is produced. The pultrusion assembly 10 comprises three consecutive sections constituting a receiving section 20, a curing section 30, and a pulling section 40. A plate element 12 is introduced into the receiving section 20 together with a plurality of reinforcing fibres constituting fibre webs or bundles of reinforcing fibre strands having an overall orientation coextending with the pultrusion direction and designated the reference numerals 14 and 16. The plate element 12 constitutes a solid insulating plate made up of e.g. solidified plastic foam, aerogel or the like. The pultrusion assembly 10 is continuously operated so as to cause a solid isolation plate element 12 which is introduced into the receiving section 20 to be moved from the left hand side of Fig. 1A to the right hand side of Fig. 1A as indicated by the arrow. The plate element 12 is thereby reinforced and encapsulated in an integral pultrusion process serving to combine the insulation properties of the plate element 12 and the advantageous load bearing properties inherent to the fibre reinforced structural element. The sections 20, 30 and 40 are shown as being separated in Fig. 1A, however, they may also be build into a single continuous structure. In the receiving section 20, the plate element 12 and the reinforcing fibre bundles 14 and 16, respectively,

The impregnated fibre assembly 18 is subsequently introduced into the curing section 30. In the curing section 30, the plate element 12 is embedded with the reinforcing fibre bundles 14 and 16, respectively, and soaked in a resin constituting a matrix material. The resin constitutes a liquid and heat curable resin and is introduced from a resin reservoir 34. The plate element 12 and the impregnated reinforcing bundles 14 and 16 form an impregnated fibre assembly 18. The matrix material is forced into the reinforcing fibres 14, 16, causing a pressurized saturation of the reinforcing fibres 14 16. The impregnated fibre assembly 18 is subsequently subjected to an elevated temperature. The heat curable matrix material is then caused to solidify or harden near the outlet 44 of the curing section 30, forming a continuous fibre reinforced profile 38. From the outlet 44 of the curing section 30, the cured reinforced profile 38 is, via roller conveyor 36, introduced into the pulling section 40 comprising a puller 42 for pulling the cured continuous fibre reinforced profile 38 through the pultrusion assembly 10 and a cutter 46 for separating the continuous fibre reinforced profile 38 into distinct fibre reinforced profiles 50, hereafter referred to as fibre reinforced structural elements.

Fig. 1B shows a pultrusion assembly 10', similar to the pultrusion assembly 10 of Fig. 1A except that no plate element is used. In the present pultrusion assembly 10', a lower fibre bundle 16 is introduced into the receiving section 20'. The lower fibre bundle 16 is continuously provided from a roll and has an overall fibre orientation in a longitudinal direction, which is corresponding to the pultrusion direction, i.e. from the left to the right in the figure. The receiving section 20' comprises a resin reservoir 34 for applying a layer of matrix material or resin such as polyurethane (PUR), polyisocyanurat (PIR) or epoxy evenly onto the lower fibre bundle. The fibres used are typically glass fibres, however, also aramid fibres, natural fibres, or thermoplastic fibres are equally feasible. Also hollow fibres may be used. Hollow fibres have higher thermal insulation capabilities, however, may have a higher structural stability. The receiving section 20' thereby forms an impregnated assembly 18' comprising the lower fibre bundle 16 and an evenly applied layer of matrix material 22.

An upper fibre bundle 14, which is identical to the lower fibre bundle 16, is continuously supplied from a roll into a further receiving section 21. In the further receiving section 21, the upper fibre bundle 14 is optionally impregnated by a foam promoting agent.

Subsequently, the resin fibre assembly 18' is conveyed into a curing section 30' together with the upper fibre bundle 14. The upper fibre bundle 14 is applied such that the matrix material 22 is located between the lower fibre bundle 16 and the upper fibre bundle 14. The impregnated fibre assembly 18' is introduced into the curing section, which applies heat onto the resin and fibre assembly 18 in order to expand and cure the matrix material 22, thereby producing a continuous fibre reinforced profile 38'. The fibre reinforced profile 38' is further conveyed to a pulling and cutting section 40 as explained in Fig. 1A.

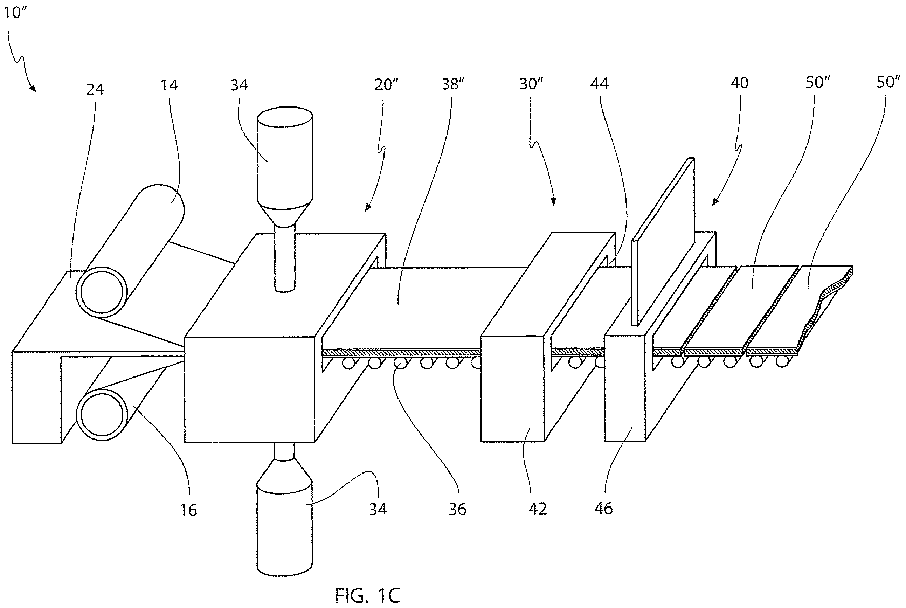

Fig. 1C shows a pultrusion assembly 10" including a mandrel 24. The mandrel 24 is introduced into the receiving section 20" between the lower fibre bundle 16 and the upper fibre bundle 14 in order to establish a fixed spacing between the bundles 14, 16. The receiving section 20" comprises two opposite resin reservoirs, both designated the reference numeral 34, for introducing matrix material into the fibre bundles 14, 16 in a direction from the outside and inwardly towards the mandrel 24, thereby producing an impregnated fibre assembly 38".

The continuous fibre reinforced profile 38" is conveyed towards a curing section 30" for expanding and curing the matrix material and producing a fibre reinforced profile 38". The fibre reinforced profile 38" is subsequently conveyed to a pulling and cutting section 40 as described above.

Fig. 2A shows a cut out view of the pultrusion assembly 10 as previously described in connection with Fig. 1A. The plate element 12 is introduced into the front part of the receiving section 20, thereby separating the upper and lower fibre bundles 14, 16. The upper and lower fibre bundles are held adjacent the plate element 12 by opposing rollers 26. The left close-up view of Fig. 2A shows the upper and lower fibre bundles 14 16 when entering the receiving section 20 on opposite sides of the plate element 12. The right close-up view of Fig. 2A shows the impregnation of the upper and lower fibre bundles by introducing resin in an inwardly direction from the outside towards the plate element 12 by using oppositely oriented nozzles 32' having respective diverging and opposing ends 33. The resin 22 is thereby introduced by high pressure applied onto a large surface and towards the mandrel 24 in order to ensure that the upper and lower fibre bundles 14, 16 are soaked by resin and thereby impregnated.

Foaming inside the upper and lower fibre bundles 14, 16, is prevented due to the high concentration of fibres which causes any bubbles which may form to collapse. The outer surfaces of the upper and lower fibre bundles 14, 16 are therefore flat and smooth. Finally, the completed fibre reinforced profile 38 is pulled out of the curing section by pullers 42 in the form of opposing rollers.

Fig. 2B shows the schematic cut out view of the pultrusion assembly 10' of Fig. 1B. The matrix material 22 is shown to be applied evenly onto the lower fibre bundle 16 by a resin nozzle 32. The resin nozzle 32 forms part of the receiving section 20'. The upper fibre bundle 14 is conveyed via a further receiving section 21', constituting a bath of foam promoting agent. The impregnated assembly 18', constituting the lower fibre bundle 16, the matrix material 22 resting on the lower fibre bundle and the upper fibre bundle 14 spaced apart from the lower fibre bundle, are guided into the curing section 30' by a roller 26. The left close-up view shows the entrance of the curing section 30' and the impregnated assembly 18' when entering the curing section 30'. The upper fibre bundle 14, which is initially non-impregnated, is introduced into the curing section 30' spaced apart from the matrix material 22.

The curing section 30' includes a heater 28' for increasing the temperature within the impregnated assembly 18'. The heater 28' is typically an electrical heater. In the present embodiment, the heater 28' is applied on the outside of the curing section 30'. The heat applied causes at least some of the matrix material 22 to expand and generate a foam 52 as shown in the central close-up view of Fig. 2B. Alternatively, the matrix material 22 may be self foaming, i.e. foaming without the use of heat. As shown in the right close-up view, the foam 52 subsequently expands further to fill the entire spacing between the upper fibre bundle 14 and the lower fibre bundle 16. The foam may be promoted by including a foam promoting agent (not shown) into the matrix material. The foam promoting agent (not shown) may be e.g. water. The increased pressure caused by the foaming, i.e. the formation of small bubbles 48 in the matrix material 22, causes some of the liquid matrix material remaining between the upper fibre bundle 14 and the lower fibre bundle 16 to enter and impregnate the upper and lower fibre bundles 14, 16. The matrix material or the foam 52 entering the upper or lower fibre bundles 14, 16 will cure and form a solid skin at the outer surfaces of the upper or lower fibre bundles 14, 16. At the right end of the curing section, the heat is increased in order to initiate the final curing and solidification of the foam 52 and the resin 22 forming the fibre reinforced profile 38', which proceeds to the puller 42 of the pulling and cutting section 40. The puller 42 is constituted by opposing conveyor belts, however, opposing rollers are equally feasible.

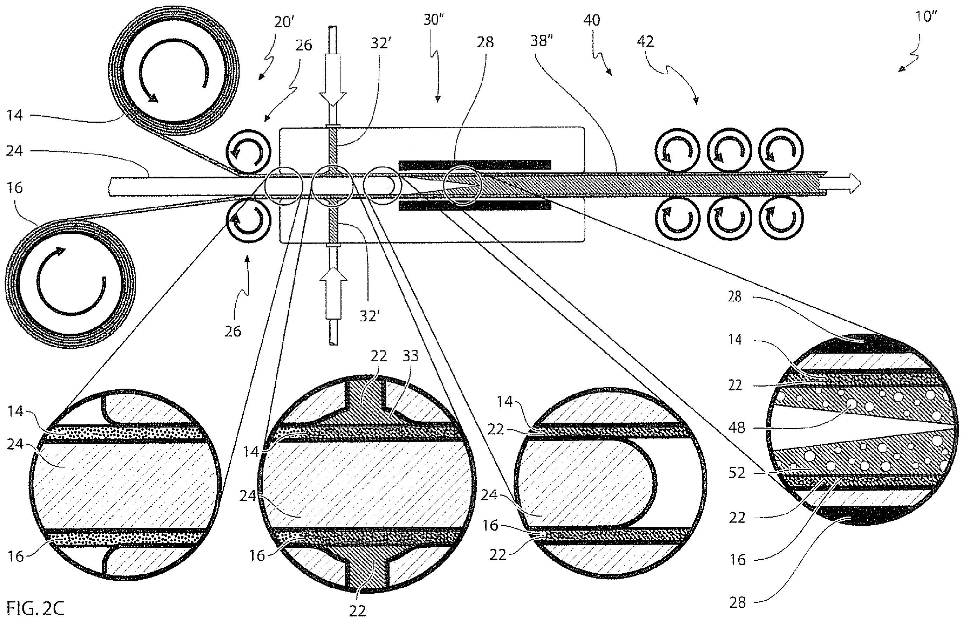

Fig. 2C shows a cut out view of the pultrusion assembly 10" as previously described in connection with Fig. 1C. The broad mandrel 24 is introduced into the front part of the receiving section 20", thereby separating the upper and lower fibre bundles 14, 16. The upper and lower fibre bundles are held adjacent the mandrel 24 by opposing rollers 26. The leftmost close-up view of Fig. 2C shows the upper and lower fibre bundles 14 16 when entering the receiving section 20" on opposite sides of the mandrel 24. The centre left close-up view of Fig. 2C shows the impregnation of the upper and lower fibre bundles by introducing resin in an inwardly direction from the outside towards the mandrel 24 by using oppositely oriented nozzles 32' having respective diverging and opposing ends 33. The resin 22 is thereby introduced by high pressure applied onto a large surface and towards the mandrel 24 in order to ensure that the upper and lower fibre bundles 14, 16 are soaked by resin and thereby impregnated.

The centre right close-up view of Fig. 2C shows the end of the mandrel 24 and the beginning of the heater 28. The rightmost close-up view shows the impregnated assembly 18 when heated, at which time the matrix material located at the inwardly facing surfaces of the upper and lower fibre bundles 14, 16 will start foaming and fill the close space in between the upper and lower resin bundles 14, 16 and the mandrel 24 by foam. Foaming inside the upper and lower fibre bundles 14, 16, is prevented due to the high concentration of fibres which cause any bubbles which may form to collapse. The outer surfaces of the upper and lower fibre bundles 14, 16 are therefore flat and smooth. Finally, the completed fibre reinforced profile 38 is pulled out of the curing section by pullers 42 as described above.

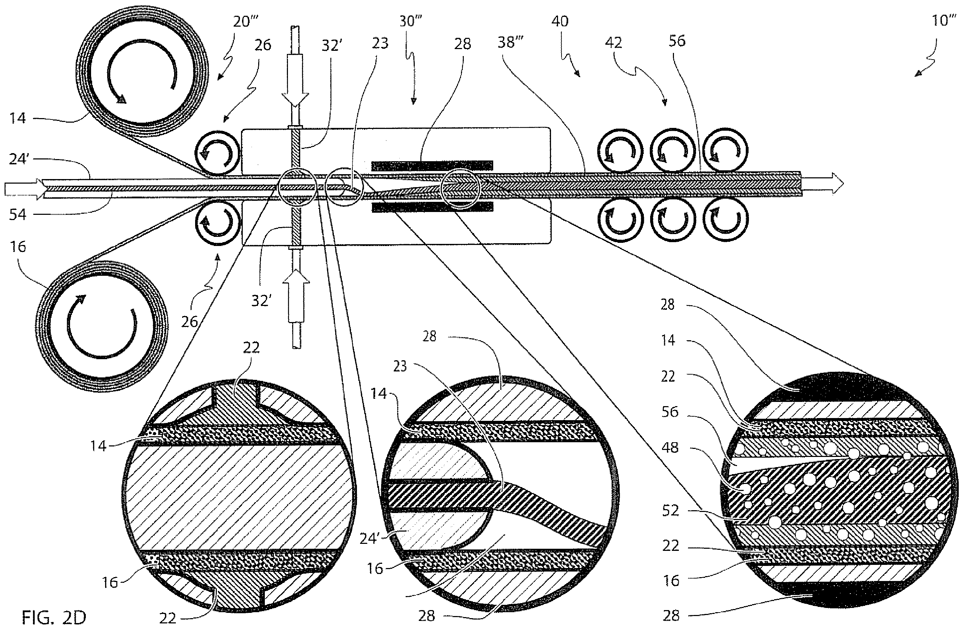

Fig. 2D shows a pultrusion assembly 10'" similar to the pultrusion assembly 10" described before in connection with Fig. 2C except that the mandrel 24' is hollow and is used for introducing further matrix material 23 into the upper and lower fibre bundles 14, 16. The further matrix material 23 may be identical to the matrix material 22 introduced via the nozzles 32. The further matrix material 23 will then foam when subjected to heat and fulfils the purpose of ensuring that the spacing in-between the upper and lower fibre bundles 14,16 are filled by matrix material and/or foam. Alternatively, the further matrix material 23 may be a solidifying material for generating a solid core, or yet alternatively a different matrix material which generates either more or less foaming compared to the foaming generated by the first matrix material 22.

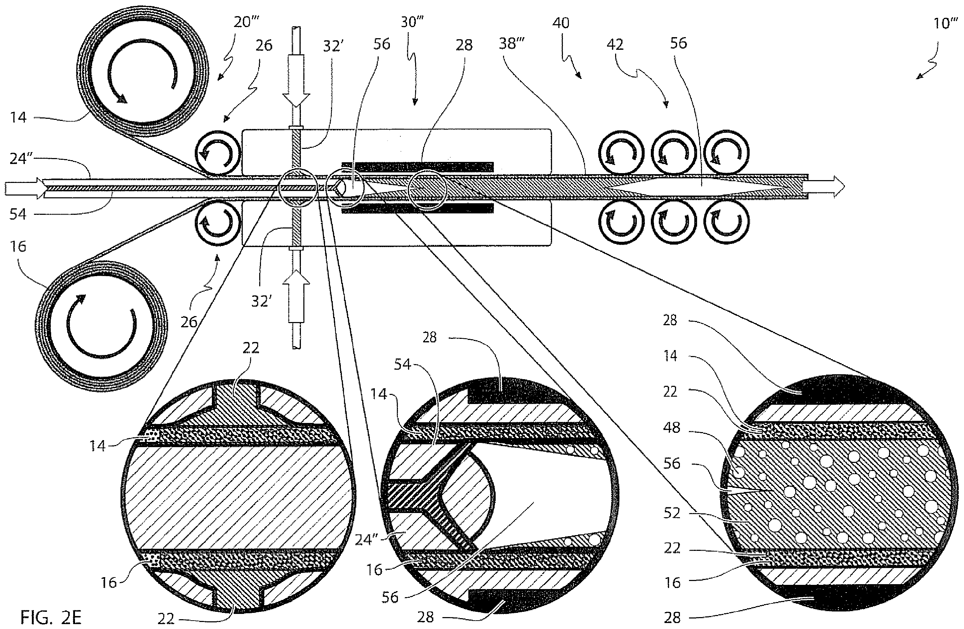

Fig. 2E shows a pultrusion assembly 10'" similar to the pultrusion assembly 10" described before in connection with Fig. 2C except that the mandrel 24' is hollow and is used for introducing foam promoting agent 54, e.g. foam initiator or foaming agent, into the upper and lower fibre bundles 14, 16. The mandrel 24" has two outlets oriented towards the upper and lower fibre bundles 14, 16, respectively. The foam promoting agent 54 is promoting or causing the foaming of the matrix material. In case no foam promoter 54 is introducted by the mandrel 24' into the upper and lower fibre bundles 14, 16, no significant foaming will occur, all matrix material will remain within the fibre bundles 14, 16 and a cavity will form between the upper and lower fibre bundles 14, 16. In case the foam promoter 54 is introduced into the matrix material, the foam will generate similarly to the previously presented embodiment of Fig. 2B. The foam promoting agent 54 may e.g. constitute water which, when heated, will form water vapour which causes bubble formation and thereby foaming. The present embodiment may be used for achieving a local foaming in the transversal direction.

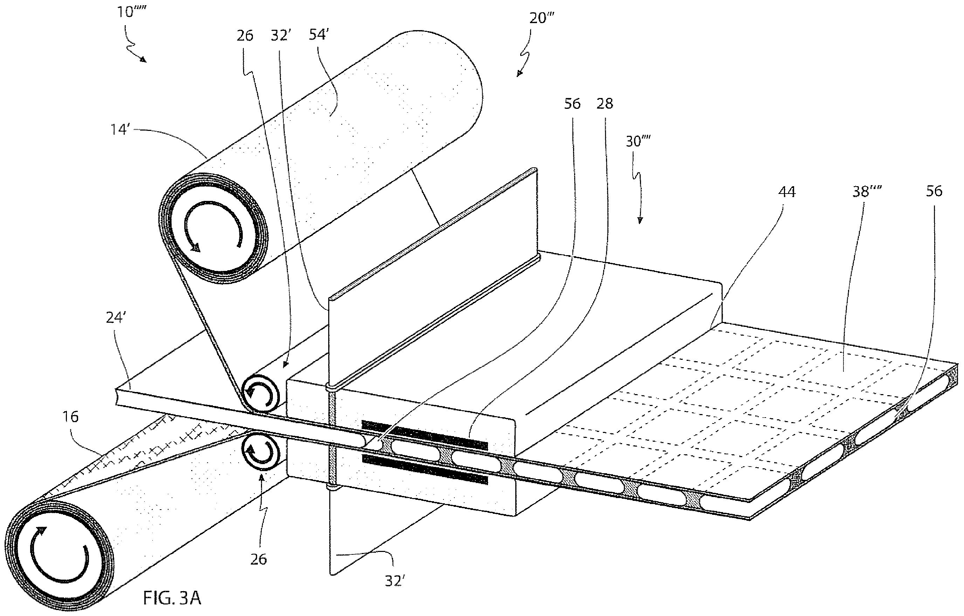

Fig. 3A shows a perspective view of a pultrusion assembly 10'" similar to the assembly 10" of fig 2C, however which features upper and lower fibre bundles 14', 16', having a foam promoting agent 54' printed on their inwardly oriented surfaces. The effect of local foaming will be similar to the previous embodiment of Fig. 2E. In the present embodiment, the non printed areas form squares which, when impregnated and heated will not initiate foaming and thus form cavities 56 in-between the foamed parts of the profile 38"". The cavities 56 may optionally be filled by solid insulation which may be supplied via the mandrel 24 similar to fig 2D. Alternatively, the cavities 56 may be filled by talcum and/or PCM material.

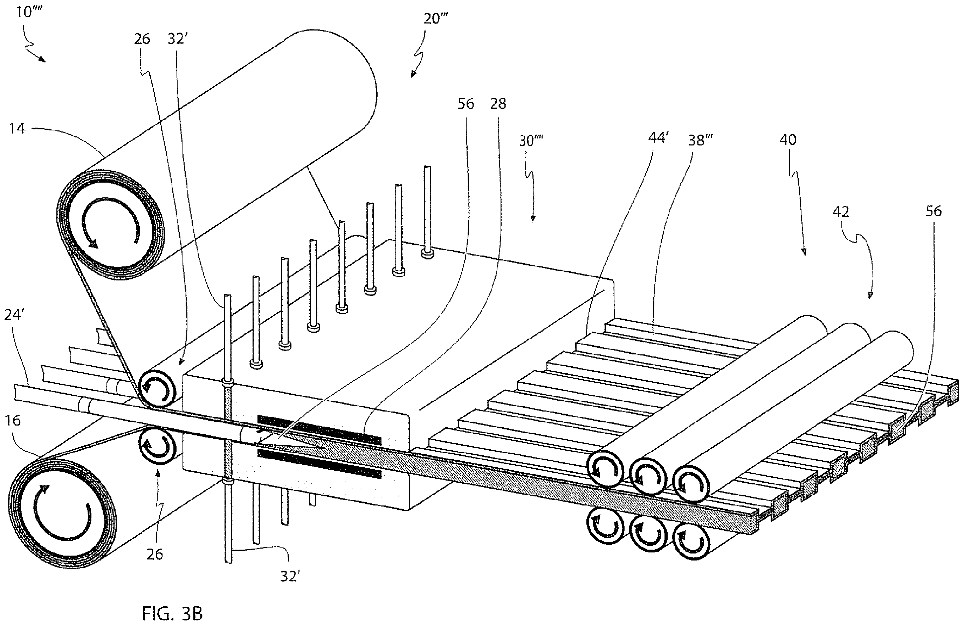

Fig. 3B shows a perspective view of a pultrusion assembly 10"", similar to the previous embodiment shown in connection with Fig 3A, however, instead of a single broad mandrel, a plurality of parallel mandrels 24' are used. The fibre reinforced profile 38"" produced by the pultrusion assembly 10"' will exhibit cavities 56, in which no foaming has occurred. The present embodiment may be used for achieving a local foaming.

By using a non-even outlet 44' of the curing section defining wider opening at locations of foaming and smaller openings at locations of non-foaming, a non-flat profile 38' may be produced. In the present case, at the location of cavities in which no foam is generated, the impregnated upper and lower fibre bundles 14 18 are pressed together forming a compact or non-expanded region without any cavity. The produced fibre reinforced profile will have interchangeably expanded and non expanded regions in the transversal direction.

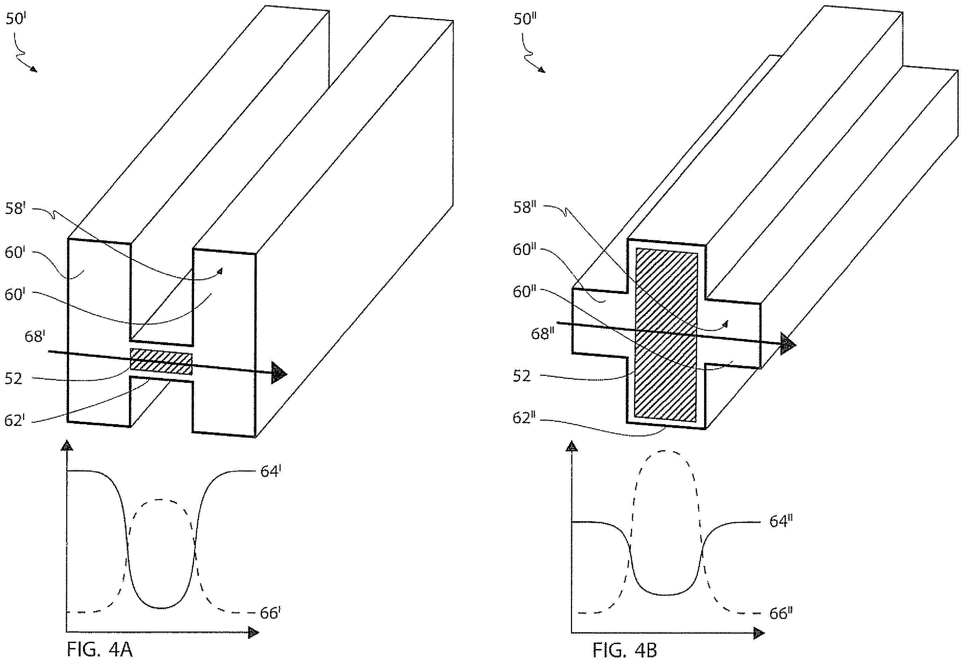

The outlet may have other shapes in order to produce a variety of shaped profiles. The fibre bundles 14, 16 may have a non-even shape to correspond to the desired cross sectional configuration of the fibre reinforced profile. In Fig. 4A-F, some examplatory shapes are presented. It is to be understood that alternative configurations are feasible , e.g. a curing section defining wider opening at locations of non-foaming and smaller openings at locations of foaming,

Fig. 4A shows a first embodiment of a fibre reinforced structural element constituting a fibre reinforced profile 50^{I} having a cross section configuration 58^{I} resembling a letter H. The profile 50^{I} includes two compact non-foamed sections 60^{I} having a high concentration of reinforcing fibres and one foamed section 62^{I} interconnecting the two non-foamed sections 60 having a low concentration of reinforcing fibres. Below the profile 50^{I}, a plot has been made showing the load bearing capability 64^{I} and the thermal insulating capabilities 66^{I} along a transversal direction 68^{II} on the cross section 58^{I}, As can be seen in the plot, at the locations of higher concentration 60 of reinforcing fibres compared to the average concentration of reinforcing fibres, the load bearing capabilities are high due to the high amount of fibres and the thermal insulating capabilities are low due to the non-presence of insulation material. Conversely, at the locations of lower concentration 62^{I} of reinforcing fibres compared to the average concentration of reinforcing fibres, the load bearing capabilities are low due to the low amount of fibres and the thermal insulating capabilities are high due to the presence of high amounts of foam 52.

Fig. 4B shows a similar profile 50" having a cross-shaped cross section. The profile 50^{II} includes two compact non-foamed sections 60^{II} having a high concentration of reinforcing fibres and one foamed section 62" having a low concentration of reinforcing fibres and interconnecting the two non-foamed sections 60^{II}. Compared to the previous embodiment of Fig 7A, the present embodiment has smaller non-foamed sections 60^{II} and a larger foamed section 62". Below the profile 50", a plot has been made showing the load bearing capability 64^{II} and the thermal insulating capabilities 66" along a transversal direction 68" on the cross section 58^{II}. As can be seen, the present plot is similar to the previous plot, however, at the locations of higher concentration 60^{II} of reinforcing fibres compared to the average concentration of reinforcing fibres, the load bearing capabilities are slightly lower than in the previous embodiment but still higher than in the foamed section 62", due to the lower concentration of reinforcing fibres compared to the previous embodiment. Conversely, at the locations of lower concentration 62^{II} of reinforcing fibres compared to the average concentration of reinforcing fibres, the thermal insulating capabilities are higher than in the previous embodiment due to the presence of higher amounts of insulation material 52 compared to the previous embodiment.

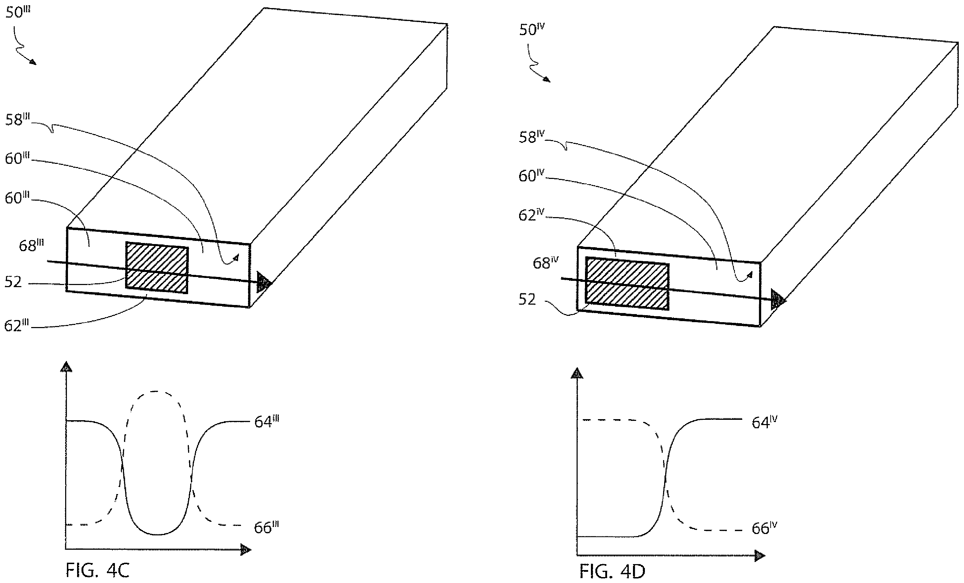

Fig. 4C shows a profile 50^{III} having a flat cross section configuration. The profile 50^{III} includes two compact non-foamed sections 60^{III} having a high concentration of reinforcing fibres and one foamed section 62^{III} interconnecting the two non-foamed sections 60 having a low concentration of reinforcing fibres. Below the profile 50^{III}, a plot has been made showing the load bearing capability 64 and the thermal insulating capabilities 66^{III} along a transversal direction 68^{III} on the cross section 58^{III}. As can be seen in the plot, the present profile 50^{III} has thermal insulation properties and load bearing properties being in-between the profiles 50^{I} and profile 50" presented in connection with Fig 7A and 7B, respectively.

Fig. 4D shows a profile 50^{IV} having a flat cross section. The profile 50^{IV} includes a single compact non-foamed section 60^{IV} having a high concentration of reinforcing fibres and one foamed section 62^{IV} having a low concentration of reinforcing fibres and being connected to the non-foamed section 60^{IV}. Below the profile 50^{IV}, a plot has been made showing the load bearing capability 64 and the thermal insulating capabilities 66 along a transversal direction 68^{IV} on the cross section 58^{IV}. As can be seen in the plot, the present embodiment of the profile 50^{IV} has a single region of high load bearing capabilities and low insulation capability, and, a single region of low load bearing capability and high insulation capability.

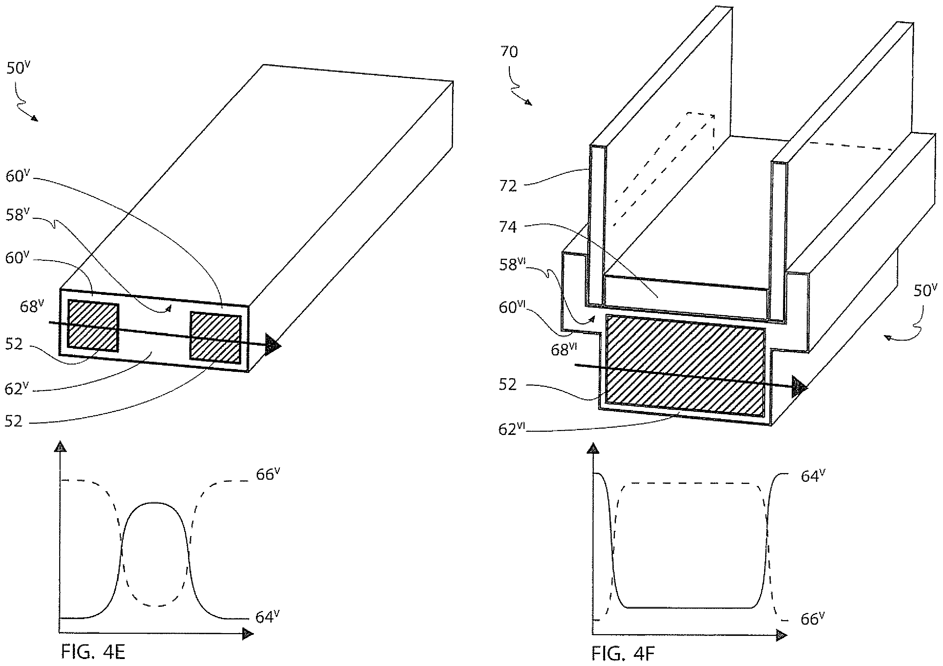

Fig. 4E shows a profile 50^{V} having a flat cross section. The profile 50^{V} includes two foamed sections 62^{V} having a low concentration of reinforcing fibres and single compact non-foamed section 60^{V} having a high concentration of reinforcing fibres and interconnecting the two foamed sections 62^{V}. Below the profile 50^{V}, a plot has been made showing the load bearing capability 64^{V} and the thermal insulating capabilities 66^{V} along a transversal direction 68^{V} on the cross section 58^{V}. As can be seen in the plot, the present embodiment has a single central region of high load bearing capabilities and low insulation capability, and two outer regions of low load bearing capability and high insulation capability.

Fig. 4F shows a building element 70 comprising a pultruded profile 50^{VI} onto which two oppositely oriented glass sheets 72 have been adhered. The pultruded profile 50^{VI} resembles the profile 50^{I} and 50^{II} presented in Figs. 7A and B in that a central insulated or foamed region 62^{VI} having a low concentration of reinforcing fibres is located in-between two non-foamed regions 60^{VI} having a high concentration of reinforcing fibres. Each glass sheet 72 is adhered to a region of the pultruded profile 50^{VI} constituting a non-foamed region 60^{VI} and having a high concentration of reinforcing fibres. The glass sheets 72 are spaced apart by a spacer 74.

Below the building element 50^{IV}, a plot has been made showing the load bearing capability 64^{VI} and the thermal insulating capabilities 66^{VI} along a transversal direction 68^{VI} on the cross section 58^{VI}. As can be seen in the plot, the present embodiment has two regions of high load bearing capabilities and low insulation capability corresponding to the non-foamed region 60^{VI} onto which region the glass sheets 72 are adhered, and a single region of low load bearing capability and high insulation capability corresponding to the foamed region 62^{VI} between the glass sheets and located below the insulated space 76. The insulated space 76 in-between the glass sheets may be filled by thermally insulating gas or alternatively, have a very low pressure for increasing the thermal insulation properties.

Thus, the structural load and any other forces such as wind which is applied onto or by the glass sheets 72 are transmitted to the non-foamed regions 60 onto which the glass sheets are adhered. The stress thus induced into the non-foamed regions is higher than the average stress in the building element 70. The stress may be calculated by a computer having FEM software or may alternatively be derived by experiments or empirically. The non-foamed regions are designed to have an amount of reinforcing fibres and matrix material sufficient for withstanding the higher stress.

The foamed region 60, on the other hand, has an amount of reinforcing fibres and matrix material sufficient for withstanding a stress being lower than the average stress in the building element, while having an amount of insulation material for achieving sufficient insulation properties and break any thermal bridge which would otherwise occur between the two non-foamed regions. The overall thermal conductivity is depending on the quality of insulation material and is typically as well calculated by a computer having FEM software or may alternatively be derived by experiments or empirically.

In the present specification, all terms such as 'vertical', 'horizontal', 'front', 'rear', 'side', 'outer', 'outwardly', 'downwardly', 'upwardly' etc. are to be construed in the context of the various intentional applications of the elements in question and by no means to be referred to as limiting definitions of orientations referring to e.g. the orientations of elements during the process of use and to the assembly of elements with another on site. Further, the non-foamed region is understood to include no foam or a low amount of foam.

Although the present invention has above been described with reference to specific, presently preferred embodiments, numerous modifications and amendments are obvious to a person having skill in the art and such modifications or amendments are to be considered part of the present invention without limiting the scope of the invention to the above described embodiments. The invention is rather to be construed in the terms of the appending claims.

In the present context, the expression 'building structure' should be construed broadly to not only encompass building structures in the normal sense such as residential buildings for one or more families, industrial buildings, shops and shopping centers, but also building structures such as ships and airplanes, for which the same fundamental principles of structural engineering apply.

### List of parts with reference to the figures:

- 10.: Pultrusion assembly
- 12.: Insulating plate element
- 14.: Upper fibre bundle
- 16.: Lower fibre bundle
- 18.: Impregnated fibre assembly
- 20.: Receiving section
- 21.: Further receiving section
- 22.: Matrix material (resin)
- 23.: Further matrix material
- 24.: Mandrel
- 26.: Roller
- 28.: Heater
- 30.: Curing section
- 32.: Nozzle
- 33.: Diverging end
- 34.: Resin reservoir
- 36.: Roller conveyor
- 38.: Continuous fibre reinforced profile
- 40.: Pulling section
- 42.: Puller
- 44.: Outlet
- 46.: Cutter
- 48.: Bubbles
- 50.: Fibre reinforced structural element
- 52.: Foam
- 54.: Foam promoter
- 56.: Cavity
- 58.: Cross section configuration
- 60.: Non-foamed region
- 62.: Foamed region
- 64.: Load bearing capability
- 66.: Thermal insulation properties
- 68.: Transversal direction
- 70.: Building element
- 72.: Glass sheet
- 74.: Spacer
- 76.: Insulated space

## Claims

1. A method of producing a fibre reinforced profile by using a pultrusion assembly (10), said method comprising the steps of:
i) introducing a reinforcing structure and liquid matrix materials (22) into said pultrusion assembly (10), said reinforcing structure comprising a first layer of reinforcing fibres (14) and a second layer of reinforcing fibres (16), said first layer of reinforcing fibres (14) and said second layer of reinforcing fibres (16) being arranged opposite each other and defining an enclosed space between themselves within said pultrusion assembly (10),
ii) impregnating said first layer of reinforcing fibres (14) by introducing a first amount of a first liquid matrix material (22) into said pultrusion assembly (10), impregnating said second layer of reinforcing fibres (16) by introducing a second amount of a second liquid matrix material (22) into said pultrusion assembly (10), introducing a third amount of a third liquid matrix material (22) into said pultrusion assembly (10) and expanding said third amount of said liquid matrix material (22) within said enclosed space between said first layer of reinforcing fibres (14) and said second layer of reinforcing fibres (16), said first, second and third liquid matrix materials (22) being compatible and of identical composition, whereby said first liquid matrix material (22) is defined as the portion of said liquid matrix material (22) which enters and remains inside said first layer (14), said second liquid matrix material (22) is defined as the portion of said liquid matrix material (22) which enters and remains inside said second layer (16) and said third liquid matrix material (22) is defined as the portion of the liquid matrix material (22) which enters and remains inside said enclosed space, and
iii) curing said first amount of said first liquid matrix material (22) in a substantially non-expanded state within said first layer of reinforcing fibres (14), curing said second amount of said second liquid matrix material (22) in a substantially non-expanded state within said second layer of reinforcing fibres (16), and curing said third amount of said third liquid matrix material (22) in an expanded state (52) within said enclosed space between said first layer and said second layer of reinforcing fibres (16), wherein said method further comprising the step of introducing a mandrel (24) partially between said first layer and said second layer of reinforcing fibres (16) and adjacent said enclosed space, **characterized in that** said first, second and third amount of liquid matrix material (22) is introduced into said first layer of reinforcing fibres (14) and/or said second layer of reinforcing fibres (16) in a direction towards said mandrel (24), said third amount of liquid matrix material (22) entering said enclosed space via said first layer of reinforcing fibres (14) and/or said second layer of reinforcing fibres (16).

2. The method according to claim 1, wherein a foaming promoting agent (54) is selectively introduced into said third liquid matrix material (22) via said mandrel (24).

3. The method according to any of the preceding claims, wherein said third liquid matrix material (22) including a foaming promoting agent (54).

4. The method according to any of the preceding claims, wherein said reinforcing structure comprising a foaming promoting agent (54) located on inwardly oriented surfaces of said first layer of reinforcing fibres (14) and said second layer of reinforcing fibres (16).

5. The method according to any of the claims 3-4, wherein said foaming promoting agent (54) is water.

6. The method according to any of the preceding claims, wherein the curing and/or foaming is initiated by heat or microwaves.

7. The method according to any of the preceding claims, wherein said first, second and third liquid matrix material (22) is based on polyester, phenols, polyurethane (PUR), polyisocyanurat (PIR) or epoxy, and/or, wherein said reinforcing fibres is based on glass fibres, aramid fibres, natural fibres or thermoplastic fibres.

8. The method according to any of the preceding claims, wherein said curing is occurring in a continuous sequence of steps, and/or, wherein said impregnating, expanding and curing is occurring in a continuous sequence of steps, and/or, wherein during said curing, the solidification of said first liquid matrix material (22) at the outwardly facing surface of said first layer and the solidification of said second liquid matrix material (22) at the outwardly facing surface of said second layer are effected before the solidification of said third matrix material (22).

## Patentansprüche

1. Verfahren zur Herstellung eines faserverstärkten Profils unter Verwendung einer Pultrusionsvorrichtung (10), wobei das Verfahren die folgenden Schritte umfasst:
i) Einführen einer Verstärkungsstruktur und flüssiger Matrixmaterialien (22) in die Pultrusionsvorrichtung (10), wobei die Verstärkungsstruktur eine erste Schicht aus Verstärkungsfasern (14) und eine zweite Schicht aus Verstärkungsfasern (16) umfasst, wobei die erste Schicht aus Verstärkungsfasern (14) und die zweite Schicht aus Verstärkungsfasern (16) einander gegenüber angeordnet sind und einen geschlossenen Raum zwischen ihnen innerhalb der Pultrusionsvorrichtung (10) definieren,
ii) Imprägnieren der ersten Schicht aus Verstärkungsfasern (14) durch Einführen einer ersten Menge eines ersten flüssigen Matrixmaterials (22) in die Pultrusionsvorrichtung (10), Imprägnieren der zweiten Schicht aus Verstärkungsfasern (16) durch Einführen einer zweiten Menge eines zweiten flüssigen Matrixmaterials (22) in die Pultrusionsvorrichtung (10), Einführen einer dritten Menge eines dritten flüssigen Matrixmaterials (22) in die Pultrusionsvorrichtung (10) und Expandieren der dritten Menge des flüssigen Matrixmaterials (22) innerhalb des geschlossenen Raumes zwischen der ersten Schicht aus Verstärkungsfasern (14) und der zweiten Schicht aus Verstärkungsfasern (16), wobei das erste, zweite und dritte flüssige Matrixmaterial (22) kompatibel sind und gleiche Zusammensetzung aufweisen, wodurch das erste flüssige Matrixmaterial als der Abschnitt des flüssigen Matrixmaterials (22) definiert ist, der in das Innere der ersten Schicht gelangt und dort verbleibt, das zweite flüssige Matrixmaterial (22) als der Abschnitt des flüssigen Matrixmaterials (22) definiert ist, der in das Innere der zweiten Schicht (16) gelangt und dort verbleibt, und das dritte flüssige Matrixmaterial (22) als der Abschnitt des flüssigen Matrixmaterials (22) definiert ist, der in das Innere des geschlossenen Raumes gelangt und dort verbleibt, und
iii) Aushärten der ersten Menge des flüssigen Matrixmaterials (22) in einem im Wesentlichen nicht expandierten Zustand innerhalb der ersten Schicht aus Verstärkungsfasern (14), Aushärten der zweiten Menge des zweiten flüssigen Matrix-materials (22) in einem im Wesentlichen nicht expandierten Zustand innerhalb der zweiten Schicht aus Verstärkungsfasern (16), und Aushärten der dritten Menge des dritten flüssigen Matrixmaterials (22) in einem expandierten Zustand (52) innerhalb des geschlossenen Raumes zwischen der ersten Schicht und der zweiten Schicht aus Verstärkungsfasern (16), wobei das Verfahren ferner den Schritt des Einführens eines Dorns (24) teilweise zwischen der ersten Schicht und der zweiten Schicht aus Verstärkungsfasern (16) und benachbart dem geschlossenen Raum umfasst, **dadurch gekennzeichnet, dass** die erste, zweite und dritte Menge des flüssigen Matrix-materials (22) in die erste Schicht aus Verstärkungsfasern (14) und/oder die zweite Schicht aus Verstärkungsfasern (16) in einer Richtung auf den Dorn (24) eingeführt werden, wobei die dritte Menge des flüssigen Matrixmaterials (22) in den geschlossenen Raum über die erste Schicht aus Verstärkungsfasern (14) und/oder die zweite Schicht aus Verstärkungsfasern (16) gelangt.

2. Verfahren nach Anspruch 1, wobei ein schaumförderndes Mittel (54) in das dritte flüssige Matrixmaterial (22) über den Dorn (24) selektiv eingeführt wird.

3. Verfahren nach einem der vorstehenden Ansprüche, wobei das dritte flüssige Matrixmaterial (22) ein schaumförderndes Mittel (54) umfasst.

4. Verfahren nach einem der vorstehenden Ansprüche, wobei die Verstärkungsstruktur ein schaumförderndes Mittel (54) umfasst, das auf nach innen weisenden Oberflächen der ersten Schicht aus Verstärkungsfasern (14) und der zweiten Schicht aus Verstärkungsfasern (16) angeordnet ist.

5. Verfahren nach einem der Ansprüche 3-4, wobei das schaumfördernde Mittel (54) Wasser ist.

6. Verfahren nach einem der vorstehenden Ansprüche, wobei das Aushärten und/oder Schäumen durch Hitze oder Mikrowellen ausgelöst ist.

7. Verfahren nach einem der vorstehenden Ansprüche, wobei das erste, zweite und dritte flüssige Matrixmaterial (22) auf Polyester, Phenolen, Polyurethan (PUR), Polyisocyanurat (PIR) oder Epoxid basieren, und/oder wobei die Verstärkungsfasern auf Glasfasern, Aramidfasern, natürlichen Fasern oder thermoplastischen Fasern basieren.

8. Verfahren nach einem der vorstehenden Ansprüche, wobei das Aushärten in einer kontinuierlichen Schrittweise erfolgt, und/oder wobei das Imprägnieren, Expandieren und Aushärten in einer kontinuierlichen Schrittweise erfolgen, und/oder wobei während des Aushärtens die Verfestigung des ersten flüssigen Matrixmaterials (22) an der nach außen weisenden Oberfläche der ersten Schicht und die Verfestigung des zweiten flüssigen Matrixmaterials (22) an der nach außen weisenden Oberfläche der zweiten Schicht vor der Verfestigung des dritten Matrix-materials (22) durchgeführt werden.

## Revendications

1. Procédé de production d'un profil renforcé par des fibres en utilisant un assemblage de pultrusion (10), ledit procédé comprenant les étapes de:
i) introduire une structure de renforcement et des matériaux de matrice liquides (22) dans ledit assemblage de pultrusion (10), ladite structure de renforcement comprenant une première couche de fibres de renforcement (14) et une deuxième couche de fibres de renforcement (16), ladite première couche de fibres de renforcement (14) et ladite deuxième couche de fibres de renforcement (16) étant disposées à l'opposée l'une de autre et définissant un espace fermé entre elles à l'intérieur dudit assemblage de pultrusion (10),
ii) imprégner ladite première couche de fibres de renforcement (14) en introduisant une première quantité d'un premier matériau de matrice liquide (22) dans ledit assemblage de pultrusion (10), imprégner ladite deuxième couche de fibres de renforcement (16) en introduisant une deuxième quantité d'un deuxième matériau de matrice liquide (22) dans ledit assemblage de pultrusion (10), introduire une troisième quantité d'un troisième matériau de matrice liquide (22) dans ledit assemblage de pultrusion (10) et dilater ladite troisième quantité dudit matériau de matrice liquide (22) à l'intérieur dudit espace fermé entre ladite première couche de fibres de renforcement (14) et ladite deuxième couche de fibres de renforcement (16), lesdits premier, deuxième et troisième matériaux de matrice liquide (22) étant compatibles et de composition identiques, ce qui fait que ledit premier matériau de matrice liquide (22) est défini comme la partie dudit matériau de matrice liquide (22) qui entre est reste à l'intérieur de ladite première couche (14), ledit deuxième matériau de matrice liquide (22) étant défini comme la partie dudit matériau de matrice liquide (22) qui entre et reste à l'intérieur de ladite deuxième couche (16) et ledit troisième matériau de matrice liquide (22) étant défini comme la partie du matériau de matrice liquide (22) qui entre et reste à l'intérieur dudit espace fermé, et
iii) durcir ladite première quantité dudit premier matériau de matrice liquide (22) dans un état substantiellement non expansé à l'intérieur de ladite première couche de fibres de renforcement (14), durcir ladite deuxième quantité dudit deuxième matériau de matrice liquide (22) dans un état substantiellement non expansé à l'intérieur de ladite deuxième couche de fibres de renforcement (14), et durcir ladite troisième quantité dudit troisième matériau de matrice liquide (22) dans un état expansé (52) à l'intérieur dudit espace fermé entre ladite première couche et ladite deuxième couche de fibres de renforcement (16), où ledit procédé comprend en outre l'étape de l'introduction d'un mandrin (24) partiellement entre ladite première couche et ladite deuxième couche de fibres de renforcement (16) et adjacent ledit espace fermé, **caractérisé en ce que**
lesdites première, deuxième et troisième quantités de matériaux de matrice liquide (22) étant introduites dans ladite première couche de fibres de renforcement (14) et/ou ladite deuxième couche de fibres de renforcement (16) dans une direction vers ledit mandrin (24), ladite troisième quantité de matériau de matrice liquide (22) entrant dans ledit espace fermé par ladite première couche de fibres de renforcement (14) et/ou ladite deuxième couche de fibres de renforcement (16).

2. Procédé selon la revendication 1, dans lequel un agent promouvant la mousse (54) est introduit de manière selective dans ledit troisième matériau de matrice liquide (22) par ledit mandrin (24).

3. Procédé selon l'une quelconque des revendications précédentes, dans lequel ledit troisième matériau de matrice liquide (22) inclut un agent promouvant la mousse (54).

4. Procédé selon l'une quelconque des revendications précédentes, dans lequel ladite structure de renforcement comprend un agent promouvant la mousse (54) localisé sur des surfaces orientées vers l'intérieur de ladite première couche de fibres de renforcement (14) et ladite deuxième couche de fibres de renforcement (16).

5. Procédé selon l'une quelconque des revendications 3 à 4, dans lequel ledit agent promouvant la mousse (54) est de l'eau.

6. Procédé selon l'une quelconque des revendications précédentes, dans lequel le durcissement et/ou le moussant est/sont initié(s) par de la chaleur ou des microondes.

7. Procédé selon l'une quelconque des revendications précédentes, dans lequel lesdits premier, deuxième et troisième matériaux de matrice liquide (22) sont basés sur du polyester, des phénols, du polyuréthane (PUR), du polyisocyanurate (PIR) ou de l'époxy, et/ou, où les fibres de renforcement sont basés sur des fibres de verres, des fibres aramides, des fibres naturelles ou des fibres thermoplastiques.

8. Procédé selon l'une quelconque des revendications précédentes, dans lequel ledit durcissement survient dans une séquence continue d'étapes, et/ou, dans lequel ladite imprégnation, ladite expansion et ledit duscissement surviennent dans une séquence continue d'étapes, et/ou, dans lequel, pendant ce durcissement, la solidification du premier matériau de matrice liquide (22) à la surface orientée vers l'extérieur de ladite première couche et la solidification dudit deuxième matériau de matrice liquide (22) à la surface orientée vers l'extérieur de ladite deuxième couche sont effectuées avant la solidification dudite troisième matériau de matrice liquide (22).
